# FASCICULE DE BREVET EUROPEEN

(11) **EP 1 860 426 B1**
(45) Date de publication et mention de la délivrance du brevet: **18.01.2012**
(21) Numéro de dépôt: 07290620.9
(22) Date de dépôt: 15.05.2007
(51) Int. Cl.: G01N 21/45, H04N 13/00, B60S 1/08

(54) **Procédé de détection de pluie sur un parebrise**
Verfahren zum Erkennen von Regen auf einer Windschutzscheibe
Method of detecting rain on a windscreen

(30) Priorité: 22.05.2006 FR 0604573
(43) Date de publication de la demande: 28.11.2007
(73) Titulaire: VALEO VISION, 93012 Bobigny Cedex (FR)
(72) Inventeur: Leleve, Joël, 93800 Epinay sur Seine (FR); Bensrhrair, Abdelaziz, 76130 Mont Saint Aignan (FR); Rebut, Julien, 75010 Paris (FR); Challita, Georges, 76650 Petit Couronne (FR)
(74) Mandataire: Tran, Chi-Hai

(56) Documents cités:
- EP-A- 1 560 159
- EP-A2- 1 580 092
- WO-A-03/097420
- WO-A-2006/024247
- WO-A1-99/23828
- FR-A- 2 884 316
- US-A1- 2005 206 511
- US-B1- 6 392 218

## Description

L'invention concerne de manière générale le domaine des véhicules automobiles. Plus particulièrement, l'invention s'intéresse aux procédés de détection de pluie sur un pare-brise de véhicule par traitement d'images, notamment en vue de déclencher la commande automatique d'une fonctionnalité du véhicule, notamment celle des essuie-glaces.

La demande de brevet EP 1 580 092 A2 décrit une caméra dans un véhicule automobile pourvue d'un capteur d'image.

La demande de brevet WO 03/097420 A décrit un dispositif pour détecter de l'humidité et/ou de la saleté sur le pare-brise à l'aide d'une caméra pourvue d'un capteur muni d'une pluralité de pixels photosensibles.

Des techniques de traitement d'images visant à détecter les gouttes de pluie sur un pare-brise sont déjà connues : elles ont généralement recours à au moins un capteur/au moins une caméra placé(e) à l'intérieur du véhicule, focalisé(s) sur le pare-brise et dédié pour cette application. C'est par exemple le cas du brevet US 6 596 978, qui préconise un système de détection des gouttes de pluie à l'aide de deux détecteurs dédiés.

Un inconvénient de ces techniques est qu'elles nécessitent justement que les détecteurs soient dédiés à la détection de pluie, alors que d'autres fonctionnalités nécessitent aussi des capteurs, pour détecter un véhicule croisant ou un bord de route par exemple. On tend alors à multiplier le nombre de capteurs dans le véhicule, ce qui renchérit leur coût global, rend l'installation de ces différents capteurs plus complexe, et tend à encombrer davantage le véhicule, notamment son habitacle.

L'invention a alors pour but de remédier à cet inconvénient, en proposant un procédé amélioré de détection de pluie sur un pare-brise. Elle vise notamment un procédé qui soit au moins aussi fiable que les procédés connus, mais qui, notamment, utilise des moyens plus compacts et/ou moins complexes et/ou plus faciles à monter sur le véhicule et/ou à utiliser.

L'invention a tout d'abord pour objet un procédé de détection de gouttes de pluie sur un pare-brise, qui utilise une caméra qui est disposée à l'intérieur du véhicule en regard du pare-brise et qui est focalisée à l'infini.

Avantageusement, cette caméra est aussi utilisée dans le véhicule pour d'autres fonctions de détection, notamment pour détecter des véhicules (pour faire commuter les projecteurs du véhicule d'un mode d'éclairage à un autre) et/ou pour détecter les bords de voie de roulage (pour envoyer un avertissement au conducteur s'il quitte sa voie de roulage). A noter que la même caméra peut donc être utilisée pour la capture d'images proches et lointaines, avec le même trajet optique, et sans qu'une zone de la caméra soit dédiée pour l'une ou l'autre des fonctions qu'elle soit remplir. La caméra selon l'invention utilise bien avantageusement une unique zone active, la même pour toutes les images à capturer.

On comprend par « caméra » tout dispositif d'acquisition d'images, de type caméra (notamment de type CCD ou CMOS) ou capteur, par exemple un capteur noir et blanc ou un capteur couleur.

Dans l'invention, on utilise donc une caméra déjà disponible, car déjà utilisée dans le véhicule pour capter des images extérieures au véhicule. Cette caméra est donc généralement focalisée à l'infini, afin de pouvoir capter avec suffisamment de clarté des éléments extérieurs au véhicule et situés à au moins 20 mètres de celui-ci. Cette caméra trouve donc une seconde utilisation avec succès, et ceci de façon surprenante : On aurait pu penser qu'une caméra focalisée à l'infini, et non sur le pare-brise, serait complètement inadaptée pour la détection de gouttes sur ledit pare-brise.

Utiliser une caméra, au lieu de deux au moins, derrière le pare-brise dans l'habitacle du véhicule permet de proposer un plus grand choix dans le positionnement de cette caméra. Il est cependant recommandé que le champ de la caméra contienne au moins une portion de pare-brise qui soit « essuyable » par les essuie glace du véhicule considéré, pour que la caméra puisse détecter l'apparition de nouvelles gouttes de pluie quand les essuie-glace sont au repos, et pas des gouttes stagnantes.

La caméra selon l'invention peut ainsi être disposée dans un module au niveau du toit intérieur du véhicule ou à sa proximité, ou sur le tableau de bord, dans une « casquette », par exemple celle de l'instrumentation de bord ou celle d'un écran de navigation.

De préférence, l'invention a également pour objet un procédé de détection de gouttes de pluie sur un pare-brise, et qui comprend :
- une étape (a) d'acquisition d'images par une caméra à travers le pare-brise, caméra de préférence focalisée à l'infini,
- une étape (b) d'extraction des contours des taches présentes sur les images acquises,
- une étape (c) de réalisation de l'histogramme des largeurs de contours des taches.

En effet, la caméra va en fait acquérir des images prenant en compte des objets sur et à travers le pare-brise, au loin, images que l'on peut assimiler chacune à un assemblage de taches. Et il s'est avéré que l'on pouvait discriminer une tache correspondant à une goutte d'eau sur le pare-brise par rapport à d'autres taches (correspondant par exemple à un objet du paysage hors du véhicule) grâce à sa largeur de contour, que l'on peut quantifier par un certain nombre de pixels. Les gouttes d'eau sur un pare-brise présentent en effet un contour relativement plus large que d'autres taches. Etablir un histogramme de ces largeurs de contour permet de sélectionner les points de contour correspondant aux gouttes, puis à « reconstruire » éventuellement ces gouttes dans les images par traitement, pour les caractériser ensuite.

Le procédé selon l'invention comprend ainsi avantageusement également :
- une étape (d) de seuillage au-delà d'un seuil minimum donné des largeurs de contours des taches, notamment afin de confirmer la présence éventuelle de taches susceptibles de correspondre à des gouttes sur le pare-brise.

Le procédé selon l'invention comprend également de préférence :
- une étape (e) de reconstruction des gouttes à partir des largeurs de contour seuillées.
- au moins une étape (f) de caractérisation des taches reconstruites, comprenant au moins une des mesures suivantes : mesure de la variation du niveau de gris dans les taches, mesure de flou desdites taches, mesure de la forme desdites taches, comptage du nombre de taches.

En effet, l'étude de la morphologie des gouttes sur des pare-brise a montré que des gouttes déposées sur une surface comme un pare-brise avaient la particularité de présenter une forte variation de niveau de gris, avec une transition zone sombre/zone claire détectable à l'intérieur des contours de la tache. Il a été aussi observé que la forme du contour de la goutte, approximativement ronde, était aussi une caractéristique détectable et particulière aux gouttes. Il a été aussi remarqué que la présence d'une goutte dans le champ de vision de la caméra créait un flou que la caméra pouvait également repérer. Le comptage des gouttes est également utile, pour pouvoir, notamment, distinguer une très faible pluie (ne nécessitant pas de déclencher le fonctionnement des essuie-glace) d'une pluie significative.

Optionnellement, le procédé selon l'invention comprend avantageusement la mise en place d'une approche hierarchique durant laquelle au moins un des étapes (b) à (f) au moins sont répétées pour différentes résolutions d'image (pleine résolution, quart de résolution, huitième de résolution ...), de manière à rendre le procédé de détection insensible à la taille des gouttes.

Cette ou ces étapes (e) et (f) restent optionnelles, l'étape de repérage de la présence de goutte par seuillage des largeurs de contours étant la plus discriminante, et suffisante. Ces étapes de recontruction et de caractérisation permettent cependant de fiabiliser encore plus les résultats de la détection, en validant par exemple les résultats obtenus par l'étape de seuillage. Elles permettent aussi d'affiner la façon dont on va exploiter la détection d'eau sur le pare-brise.

Par exemple, si la détection de pluie a pour objectif de déclencher les essuie glace, une simple détection par seuillage des largeurs de contour suffit pour permettre le déclenclement en tout ou rien des essuie glace. Par contre, si le procédé permet aussi de connaitre, par exemple, la quantité et la forme des gouttes, on peut déclenche de façon plus modulée le fonctionnement des essuie glace, notamment en sélectionnant la vitesse la plus appropriée de balayage, en modifiant la vitesse de balayage si les conditions changent (forte ou faible pluie).

Le procédé selon l'invention comporte aussi, de préférence :
- une étape (g) de participation au déclenchement automatique ou de modification automatique d'une fonctionnalité du véhicule, notamment l'actionnement des essuie-glaces, une fois la détection des gouttes d'eau sur le pare-brise faite/validée.

Naturellement, l'invention s'intéresse aussi à la commande automatique d'arrêt des essuie-glace), commande qui peut se déclencher quand le procédé de détection de pluie selon l'invention montre qu'il n'y a plus (ou plus suffisamment) de gouttes de pluie sur le pare-brise (car elles ont été essuyées par les balais d'essuie-glace, la pluie ayant cessé). L'invention peut permettre aussi, notamment grâce à l'étape (f) de comptage des gouttes de déclencher de façon modulée les essuie-glace selon que la pluie est considérée comme faible (peu de gouttes, fréquence de balayage des essuie-glace modérée), ou forte (beaucoup de gouttes, pluie forte, augmentation de la fréquence de balayage des essuie-glace).

La détection de la présence de pluie sur le pare-brise selon l'invention peut aussi être prise en compte dans un autre traitement d'images acquises par la même caméra dans un autre but. Il peut s'agir notamment de la détection d'images de véhicules roulant sur la même voie de roulage ou sur la voie opposée, en vue de la commande automatique des projecteurs permettant de faire évoluer automatiquement les projecteurs d'un mode de fonctionnement à un autre. Il peut s'agir, comme déjà évoqué, par exemple de la commutation automatique des projecteurs d'un véhicule d'un état d'éclairage de type «feux de route» vers un état d'éclairage «feux de croisement/code». Il peut aussi s'agir de la détection des bords des voies de roulage, en vue d'avertir le conducteur d'une sortie de voie involontaire (en anglais, une fonction appelée LDWS pour « Lane Departure Warning Signal »).

Pour augmenter la fiabilité de la détection des gouttes de pluie, il est préférable que les étapes a- d'acquisition, b- d'extraction, c- de réalisation de l'histogramme au moins soient répétées plusieurs fois, et que leurs résultats soient comparés avant de déclencher, en cas de concordance suffisante, l'étape g- de commande, par exemple au moins dix fois.

L'invention concerne aussi le dispositif permettant de mettre en oeuvre le procédé décrit plus haut, avec tous les moyens adaptés à réaliser toutes les étapes de celui-ci.

Elle concerne notamment un dispositif de détection de gouttes de pluie sur un pare-brise, dispositif comprenant une caméra disposée à l'intérieur du véhicule qui est en regard du pare-brise et qui est focalisée à l'infini.

Elle concerne également un dispositif de détection de gouttes de pluie sur un pare-brise, notamment selon la revendication précédente, qui comprend
- des moyens d'acquisition d'images par une caméra à travers le pare-brise, caméra notamment focalisée à l'infini,
- des moyens d'extraction des contours des taches présentes sur les images acquises,
- des moyens de réalisation de l'histogramme des largeurs de contours des taches,
- des moyens de seuillage au-delà d'un seuil minimum donné des largeurs de contours des taches, afin de confirmer la présence éventuelle de taches susceptibles de correspondre à des gouttes sur le pare-brise,
- éventuellement des moyens de reconstruction / caractérisation des taches à partir des largeurs de contour seuillées, comprenant au moins un moyen de mesure de l'un des paramètres suivants : mesure de la variation du niveau de gris dans les taches, mesure de flou desdites taches, mesure de la forme desdites taches, comptage desdites taches.
- des moyens de commande de déclenchement automatique ou de modification automatique d'une fonctionnalité du véhicule, notamment l'actionnement des essuie-glaces.

Avantageusement, la caméra utilisée par le dispositif selon l'invention est partagée avec au moins un autre dispositif équipant ledit véhicule.

L'invention concerne aussi tout moyen de stockage d'information, mémorisant un ou plusieurs programmes dont l'exécution autorise une mise en oeuvre du procédé décrit plus haut.

Elle concerne également tout programme d'ordinateur sur un moyen de stockage d'information, comportant une ou plusieurs séquences d'instructions exécutables par un microprocesseur et/ou un ordinateur, l'exécution desdites séquences d'instructions autorisant une mise en oeuvre du procédé décrit plus haut.

D'autres aspects et avantages de la présente l'invention apparaîtront à la lecture de la description d'un mode de réalisation particulier non limitatif, qui concerne la commande automatique des essuie-glace par détection de gouttes de pluie sur le pare-brise, faite en référence aux dessins annexés, dans lesquels :
- La figure 1 représente la structure générale schématique d'un dispositif de commande d'essuie-glace utilisant le procédé de détection de pluie selon l'invention,
- La figure 2 représente un algorithme d'une mise en oeuvre d'un procédé selon l'invention,
- La figure 3a à 3e représente les étapes successives de traitement d'une image acquise par la caméra 10 selon le procédé de l'invention.

Ces figures sont extrêmement schématiques afin d'en conserver la clarté.

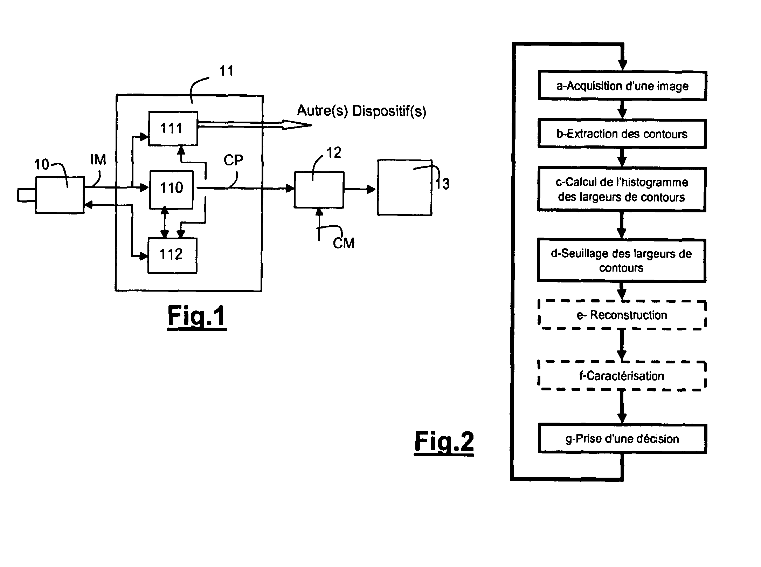

En référence à la figure 1, le dispositif de commande automatique des essuie-glaces commande le déclenchement des essuie-glaces du véhicule 13 quand sont détectées des gouttes de pluie sur le pare-brise d'un véhicule. Il comprend essentiellement une caméra 10, une unité de traitement 11 et un circuit de commande 12.

La caméra 10 est installée dans l'habitacle du véhicule, en regard d'une zone « essuyable » du pare-brise 14, c'est-à-dire une zone qui est essuyée par un des balais d'essuie-glace quand il est en fonctionnement. La caméra est disposée par exemple sur le tableau de bord à environ 30 cm du pare-brise. La caméra prend des scènes de route successives depuis l'avant du véhicule à travers le pare-brise. Elle présente un angle d'ouverture horizontale d'environ 40° et un angle d'ouverture verticale d'environ 30°. Bien sûr, le positionnement et les ouvertures angualires de la caméra sont donnés ici à simple titre d'illustration. De préférence, elle est configurée de façon à avoir un champ de vision du pare-brise d'au moins 20 à 30 cm², ce qui constitue une surface suffisamment représentatitve de l'ensemble du pare brise. La caméra 10 délivre des images IM à l'unité de traitement 11, notamment en vue de déclencher la commutation automatique des projecteurs du véhicule d'un mode « route » à un mode « croisement ». Elle va aussi servir, pour l'invention, à détecter la présence éventuelle de pluie sur le pare-brise.

Dans l'exemple décrit ici, la caméra 10 utilise un capteur noir et blanc, de dynamique et de sensibilité appropriées. (On rappelle que la sensibilité d'un capteur correspond à sa capacité à détecter de faibles variations d'intensité lumineuse, et que sa dynamique correspond à sa capacité à détecter sur une grande plage d'intensités lumineuses).

L'image IM fournit par la caméra 10 est numérisée par un convertisseur analogique-numérique (non représenté) implanté dans l'unité de traitement 11. Dans la forme de réalisation représentée à la Fig.1, l'image IM numérisée est fournie à des modules logiciels de traitement 110 et 111.

Le module logiciel de traitement 110 est dédié, dans l'unité de traitement 11, au fonctionnement du dispositif de commande des essuie-glaces selon l'invention. Conformément à l'invention, le module logiciel de traitement 110 est apte à traiter l'image IM1 et à en extraire une information CP pour la commande des essuie-glaces 12.

L'élément référencé 111 représente schématiquement différents autres modules logiciels de traitement implantés dans l'unité de traitement 11 et qui remplissent des fonctions de traitement autres que celles requises par le dispositif de commande de commutation automatique des essuie-glace selon l'invention. Les modules logiciels 111 appartiennent à d'autres dispositifs qui sont embarqués dans le véhicule et qui partagent les images IM et l'unité de traitement 11 avec le dispositif de commande de des essuie-glace selon l'invention. Ces autres dispositifs sont par exemple un système d'aide à la navigation sur route et/ou un dispositif de détection de virage pour la commande des projecteurs dans les virages («bending light » en anglais) et/ou un système de commande de commutation des projecteurs du mode « route » vers le mode « croisement ».

Outre l'information de commande CP, le circuit de commutation 12 reçoit également une information de commande manuelle CM. L'information de commande manuelle CM est représentative d'un actionnement manuel des essuie-glaces par le conducteur du véhicule. Cet actionnement manuel CM par le conducteur est prioritaire par rapport à la commande automatique CP des essuie-glaces.

Il n'est pas nécessaire ici de décrire en détails l'architecture de l'unité de traitement, qui comprend notamment une unité centrale de traitement telle qu'un microprocesseur, une mémoire morte, une mémoire vive, une mémoire de stockage, des interfaces et un bus de communication interne. Dans un autre mode de réalisation de l'invention, l'unité de traitement 11 est également équipée d'un moyen de communication homme-machine, tel qu'un clavier, à travers lequel le conducteur peut sélectionner différents modes de fonctionnement. On notera également que l'unité de traitement 11 peut prendre la forme d'un appareil programmé, Cet appareil programmé contient alors le code exécutable des programmes sous une forme figé dans un circuit intégré à application spécifique (ASIC).

La figure 2 décrit maintenant un algorithme complet d'un procédé de selon l'invention.

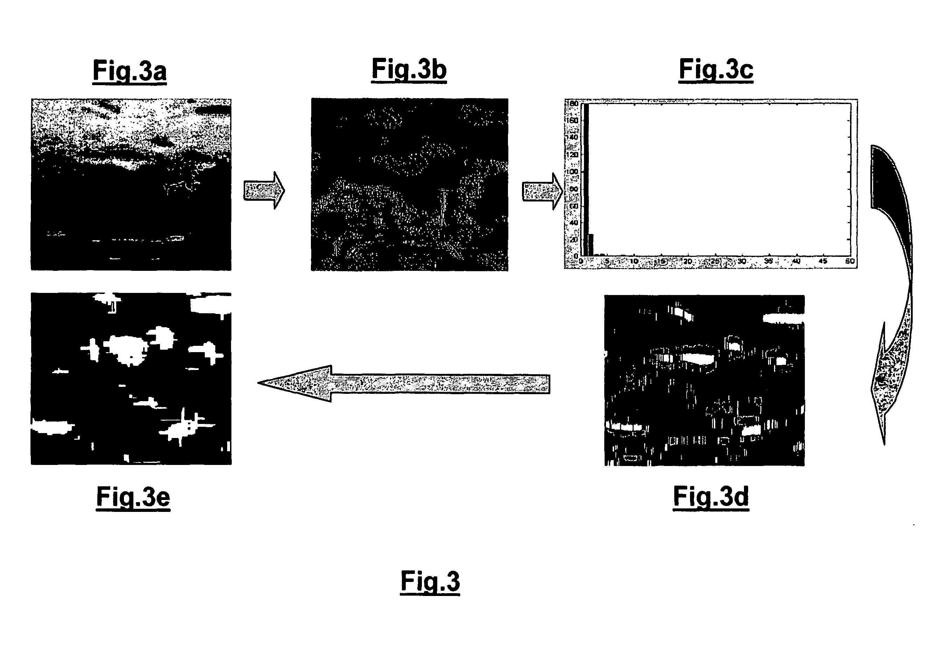

L'algorithme se décompose de la façon suivante :
- étape (a) d'acquisition d'une image par la caméra à travers le pare-brise. C'est l'étape d'obtention d'une image initiale, comme montré en figure 3a.
- étape (b) d'extraction des contours des taches présentes sur l'image initiale, et de mesure de largeur desdits contours, opération faite avec un opérateur de contours permettant de caractériser la largeur des contours (la déclivité par exemple). C'est l'étape de la détermination des contours, comme montré à la figure 3b,
- étape (c) de réalisation de l'histogramme des largeurs de contours des taches. C'est l'étape qui va permettre de discriminer les taches correspondant à des gouttes de pluie sur le pare-brise des autres taches de l'image. La figure 3c représente un tel histogramme (en abscisse, la largeur de contour en nombre de pixels, en ordonnées le nombre de pixels ayant la largeur considérée). On considère généralement qu'on a affaire à un contour net quand la largeur de contour est de 1 pixel, et que le contour est significativement flou au-delà de 5 pixels, entre 5 et 10 pixels par exemple.

On remarque de la figure 3c un nombre très important de taches ayant une largeur de contour inférieur à 2 pixels, et une faible minorité de taches ayant une largeur de contour d'au moins 5 pixels.
- étape (d) de seuillage des taches de contour de largeur d'au moins 5 pixels. On identifie ainsi le nombre de taches correspondant à des gouttes de pluie sur le pare-brise. (ou de taches susceptible de correspondre à des gouttes de pluie, si on prévoit des étapes supplémentaires de validation)
- étape (e) de reconstruction des gouttes (optionnelle) : il s'agit ici d'étiquetter les gouttes repérées par leur largeur de contout lors de l'étape (d) de seuillage : on obtient une image traitée comme représenté en figure 3d, ne contenant plus que la représentation des gouttes, gouttes que l'on peut compter.
- étape (f) de caractérisation des gouttes (optionnelle) elle suit car elle exploite les données obtenues à l'étape (e) de reconstruction. Elle consiste à faire au moins une caractérisation, par exemple des transitions claire/sombre et sombre/claire dans les taches, (la présence de ces transitions étant caractéristique de gouttes de pluie), et/ou compter les gouttes. On obtient une image comme représentée à la figure 3e.
- étape (g) : déclenchement des essuie-glace si la présence d'un nombre de gouttes suffisant est détectée (et a été validée de préférence par réitération, par exemple au moins 10 fois, du traitement précédent sur plusieurs images successives pour confirmer le résultat). Le capteur est apte à prendre au moins 10 images par seconde.

En conclusion, ce type de traitement permet de discriminer aisément et de façon fiable et reproductible, dans une image prise à travers un pare-brise, des gouttes de pluie déposées sur le pare-brise, sans avoir recours à un capteur dédié à la détection de pluie.

## Revendications

1. Procédé de détection de gouttes de pluie sur un pare-brise, utilisant une caméra qui est disposée à l'intérieur du véhicule en regard du pare-brise et qui est focalisée à l'infini,
- une étape (a) d'acquisition d'images par la caméra à travers le pare-brise, **caractérisé en ce qu'**il comprend
- une étape (b) d'extraction des contours des taches présentes sur les images acquises,
- une étape (c) de réalisation de l'histogramme des largeurs de contours des taches,
- une étape (d) de seuillage au-delà d'un seuil minimum donné des largeurs de contours des taches, notamment afin de confirmer la présence éventuelle de taches susceptibles de correspondre à des gouttes sur le pare-brise.

2. Procédé selon la revendication précédente, **caractérisé en ce qu'**il utilise la caméra qui est également utilisée pour détecter des véhicules et/ou les bords de voie de roulage et/ou pour faire commuter les projecteurs du véhicule d'un mode d'éclairage à un autre.

3. Procédé selon la revendication précédente, **caractérisé en ce qu'**il comprend :
- une étape (e) de reconstruction des gouttes à partir des largeurs de contour seuillées.

4. Procédé selon la revendication précédente, **caractérisé en ce qu'**il comprend :
- au moins une étape (f) de caractérisation des taches reconstruites, comprenant au moins une des mesures suivantes : mesure de la variation du niveau de gris dans les taches, mesure de flou desdites taches, mesure de la forme desdites taches, comptage du nombre de taches.

5. Procédé selon l'une des revendications précédentes, **caractérisé en ce qu'** au moins une des étapes (b à f) sont mises en oeuvre dans le cadre d'une approche hierarchique.

6. Procédé selon l'une des revendications précédentes, **caractérise en ce qu'**il comprend :
- une étape (g) de participation au déclenchement automatique ou de modification automatique d'une fonctionnalité du véhicule, notamment l'actionnement des essuie-glace, une fois la détection des gouttes d'eau sur le pare-brise faite.

7. Dispositif de détection de gouttes de pluie sur un pare-brise comprenant une caméra disposée à l'intérieur du véhicule qui est en regard du pare-brise et qui est focalisée à l'infini, et
- des moyens d'acquisition d'images par la caméra à travers le pare- brise, **caractérisé en ce qu'**il comprend
- des moyens d'extraction des contours des taches présentes sur les images acquises,
- des moyens de réalisation de l'histogramme des largeurs de contours des taches,
- des moyens de seuillage au-delà d'un seuil minimum donné des largeurs de contours des taches, afin d'identifier la présence éventuelle de taches susceptibles de correspondre à des gouttes sur le pare-brise.

8. Dispositif de détection de gouttes de pluie sur un pare-brise, selon la revendication précédente, **caractérisé en ce qu'**il comprend
- éventuellement des moyens de reconstruction / caractérisation des taches à partir des largeurs de contour seuillées, comprenant au moins un moyen de mesure de l'un des paramètres suivants : mesure de la variation du niveau de gris dans les taches, mesure de flou desdites taches, mesure de la forme desdites taches, comptage desdites taches.
- des moyens de commande de déclenchement automatique ou de modification automatique d'une fonctionnalité du véhicule, notamment l'actionnement des essuie-glaces.

9. Dispositif selon la revendication 7 ou 8, **caractérisé en ce que** la caméra est partagée avec au moins un autre dispositif équipant ledit véhicule.

10. Moyen de stockage d'information, **caractérisé en ce qu'**il émerise un ou plusieurs programmes dont l'exécution autorise une mise en oeuvre du procédé selon l'une des revendications 1 à 6.

11. Programme d'ordinateur sur un moyen de stockage d'information, comportant une ou plusieurs séquences d'instructions exécutables par un microprocesseur et/ou un ordinateur, l'exécution desdites séquences d'instructions autorisant une mise en oeuvre du procédé selon l'une des revendications 1 à 6.

## Claims

1. Method for detection of drops of rain on a windscreen, using a camera which is disposed in the interior of the vehicle opposite the windscreen, and is focussed on infinity, comprising:
- a step (a) of acquisition by the camera through the windscreen, **characterised in that** it comprises:
- a step (b) of extraction of the contours of the spots which are present on the images acquired;
- a step (c) of production of the histogram of the widths of contours of the spots; and
- a step (d) of thresholding beyond a given minimum threshold of the widths of contours of the spots, in particular in order to confirm any presence of spots which may correspond to drops on the windscreen.

2. Method according to the preceding claim, **characterised in that** it uses the camera, which is also used to detect vehicles and/or the edges of the road travelled, and/or to switch the headlights of the vehicle from one lighting mode to another.

3. Method according to the preceding claim, **characterised in that** it comprises:
- a step (e) of reconstruction of the drops from the contour widths thresholded.

4. Method according to the preceding claim, **characterised in that** it comprises:
- at least one step (f) of characterisation of the spots reconstructed, comprising at least one of the following measurements: measurement of the variation of the level of grey in the spots, measurement of the lack of focus of the said spots, measurement of the form of the said spots, and counting of the number of spots.

5. Method according to one of the preceding claims, **characterised in that** at least one of the steps (b to f) is implemented within the context of a hierarchical approach.

6. Method according to one of the preceding claims, **characterised in that** it comprises:
- a step (g) of participation in the automatic triggering or automatic modification of a functionality of the vehicle, in particular the actuation of the windscreen wipers, once the drops of water have been detected on the windscreen.

7. Device for detection of drops of rain on a windscreen, comprising a camera which is disposed in the interior of the vehicle opposite the windscreen, and is focussed on infinity; and
- means for acquisition of images by the camera through the windscreen, **characterised in that** it comprises:
- means for extraction of the contours of the spots which are present on the images acquired;
- means for production of the histogram of the widths of contours of the spots; and
- means for thresholding beyond a given minimum threshold of the widths of contours of the spots, in order to identify any presence of spots which can correspond to drops on the windscreen.

8. Device for detection of drops of rain on a windscreen, according to the preceding claim, **characterised in that** it comprises:
- optionally means for reconstruction / characterisation of the spots on the basis of the contour widths thresholded, comprising at least one means for measurement of one of the following parameters: measurement of the variation of the level of grey in the spots, measurement of the lack of focus of the said spots, measurement of the form of the said spots, and counting of the number of spots; and
- means for controlling the automatic triggering or automatic modification of a functionality of the vehicle, in particular the actuation of the windscreen wipers.

9. Device according to claim 7 or 8, **characterised in that** the camera is shared with at least one other device which equips the said vehicle.

10. Means for storage of information **characterised in that** it stores one or a plurality of programmes, the execution of which permits implementation of the method according to one of claims 1 to 6.

11. Computer programme on an information storage means, comprising one or a plurality of sequences of instructions which can be executed by a microprocessor and/or a computer, the execution of the said sequences of instructions permitting implementation of the method according to one of claims 1 to 6.

## Patentansprüche

1. Verfahren zum Erkennen von Regentropfen auf einer Windschutzscheibe, unter Verwendung einer Kamera, die im Fahrzeuginneren der Windschutzscheibe gegenüber angeordnet und ins Unendliche fokussiert ist, und mit einem Schritt (a) zum Erfassen von Bildern durch die Kamera durch die Windschutzscheibe hindurch, **dadurch gekennzeichnet, dass** es umfasst:
- einen Schritt (b) zum Extrahieren der Konturen der auf den erfassten Bildern vorhandenen Flecken,
- einen Schritt (c) zum Erstellen eines Histogramms der Breiten der Fleckenkonturen,
- einen Schritt (d) zum Durchführen eines Schwellenwertvergleichs jenseits einer gegebenen Mindestschwelle der Breiten der Fleckenkonturen, insbesondere zur Bestätigung der möglichen Existenz von Flecken, die Tropfen auf der Windschutzscheibe entsprechen können.

2. Verfahren nach dem vorhergehenden Anspruch,
**dadurch gekennzeichnet, dass** es die Kamera verwendet, die auch zum Erkennen von Fahrzeugen und/oder Fahrspurbegrenzungen und/oder zum Umzuschalten der Fahrzeugscheinwerfer von einem Beleuchtungsmodus in einen anderen verwendet wird.

3. Verfahren nach dem vorhergehenden Anspruch,
**dadurch gekennzeichnet, dass** es umfasst:
- einen Schritt (e) zum Rekonstruieren der Tropfen anhand der durch Schwellenwertvergleich ermittelten Konturbreiten.

4. Verfahren nach dem vorhergehenden Anspruch,
**dadurch gekennzeichnet, dass** es umfasst:
- wenigstens einen Schritt (f) zum Charakterisieren der rekonstruierten Flecken, der wenigstens eine der folgenden Messungen umfasst: Messen der Variation der Graustufe in den Flecken, Messen der Unschärfe der Flecken, Messen der Form der Flecken, Zählen der Fleckenanzahl.

5. Verfahren nach einem der vorhergehenden Ansprüche,
**dadurch gekennzeichnet, dass** wenigstens einer der Schritte (b bis f) im Rahmen einer hierarchischen Annäherung ausgeführt wird.

6. Verfahren nach einem der vorhergehenden Ansprüche,
**dadurch gekennzeichnet, dass** es umfasst:
- einen Schritt (g) zum Mitwirken bei der automatischen Auslösung oder der automatischen Änderung einer Funktionalität des Fahrzeugs, insbesondere die Betätigung der Scheibenwischer, nachdem Wassertropfen auf der Windschutzscheibe erkannt worden sind.

7. Vorrichtung zum Erkennen von Regentropfen auf einer Windschutzscheibe, mit einer im Fahrzeuginneren angeordneten Kamera, die sich der Windschutzscheibe gegenüber befindet und die ins Unendliche fokussiert ist, und Mitteln zum Erfassen von Bildern durch die Kamera durch die Windschutzscheibe hindurch,
**dadurch gekennzeichnet, dass** sie umfasst:
- Mittel zum Extrahieren der Konturen der auf den erfassten Bildern vorhandenen Flecken,
- Mittel zum Erstellen eines Histogramms der Breiten der Fleckenkonturen,
- Mittel zum Durchführen eines Schwellenwertvergleichs jenseits einer gegebenen Mindestschwelle der Breiten der Fleckenkonturen, zur Ermittlung der möglichen Existenz von Flecken, die Tropfen auf der Windschutzscheibe entsprechen können.

8. Vorrichtung zum Erkennen von Regentropfen auf einer Windschutzscheibe nach dem vorhergehenden Anspruch,
**dadurch gekennzeichnet, dass** sie umfasst:
- gegebenenfalls Mittel zum Rekonstruieren/Charakterisieren der Tropfen anhand der durch Schwellenwertvergleich ermittelten Konturbreiten, mit wenigstens einem Mittel zum Messen eines der folgenden Parameter: Messen der Variation der Graustufe in den Flecken, Messen der Unschärfe der Flecken, Messen der Form der Flecken, Zählen der Flecken,
- Mittel zum Steuern der automatischen Auslösung oder der automatischen Änderung einer Funktionalität des Fahrzeugs, insbesondere die Betätigung der Scheibenwischer.

9. Vorrichtung nach Anspruch 7 oder 8,
**dadurch gekennzeichnet, dass** die Kamera zusammen mit wenigstens einer anderen das Fahrzeug ausrüstenden Vorrichtung genutzt wird.

10. Mittel zur Datenspeicherung,
**dadurch gekennzeichnet, dass** darauf ein oder mehrere Programme gespeichert sind, deren Ausführung eine Durchführung des Verfahrens nach einem der Ansprüche 1 bis 6 erlaubt.

11. Computerprogramm auf einem Datenspeichermittel, mit einer oder mehreren durch einen Mikroprozessor und/oder einen Computer ausführbaren Befehlsfolgen, wobei die Ausführung dieser Befehlsfolgen eine Durchführung des Verfahrens nach einem der Ansprüche 1 bis 6 erlaubt.
